# EUROPEAN PATENT SPECIFICATION

(11) **EP 3 993 674 B1**
(45) Date of publication and mention of the grant of the patent: **08.05.2024**
(21) Application number: 20753467.8
(22) Date of filing: 01.07.2020
(51) Int. Cl.: A47J 31/44, A47J 31/06, A47J 31/46

(54) **DELIVERY ASSEMBLY FOR A COFFEE BEVERAGE AND CORRESPONDING DELIVERY MACHINE**
ABGABEANORDNUNG FÜR EIN KAFFEEGETRÄNK UND ENTSPRECHENDE ABGABEMASCHINE
ENSEMBLE DE DISTRIBUTION POUR UNE BOISSON AU CAFÉ ET MACHINE DE DISTRIBUTION CORRESPONDANTE

(30) Priority: 04.07.2019 IT 201900010914
(43) Date of publication of application: 11.05.2022
(73) Proprietor: Illycaffe' S.p.A., 34147 Trieste (IT)
(72) Inventor: PIRAS, Riccardo, 34123 TRIESTE (IT); BULIGATTO, Eleonora, 34134 TRIESTE (IT); CESCUTTI, Francesco, 34135 TRIESTE (IT); ROCCAFORTE, Filippo, 33100 UDINE (IT)
(74) Representative: Petraz, Gilberto Luigi
(86) International application number: PCT/IT2020/050168
(87) International publication number: WO 2021/001865

(56) References cited:
- EP-A1- 2 103 235
- EP-A1- 3 434 948
- WO-A1-2013/014047
- WO-A2-2006/134479
- WO-A2-2008/058633
- DE-U1- 8 900 220

## Description

### FIELD OF THE INVENTION

The present invention concerns a delivery assembly for a coffee beverage and the corresponding delivery machine. In particular, embodiments described here concern a delivery assembly for a coffee beverage usable in a coffee preparation machine able to supply, on each occasion, coffee-based beverages customized according to the specific requirements of a user.

### BACKGROUND OF THE INVENTION

Coffee delivery machines exist which, by extraction, that is, the controlled percolation of hot water under pressure through a layer or wad of coffee powder, deliver the type of coffee-based beverage required.

Such machines are provided with a pump to supply pressurized water and a heating device to obtain water and/or water vapor. The pressurized hot water and/or water vapor are introduced into a delivery assembly where an extraction chamber is provided in which the coffee powder is present and where the pressurized extraction process takes place, which leads to the delivery of the coffee beverage. Downstream of the extraction chamber there can be a delivery valve to regulate and control the delivery flow of the liquid coffee.

Some known machines are provided with a control unit configured to drive the pump, the heating device, the one or more valves connected to the extraction chamber, pneumatic pistons to define the volume of the extraction chamber, or other components, in relation to the type of coffee liquid to be delivered.

Known control units provide to detect a plurality of parameters by means of sensors installed along the path of the water, in the extraction chamber and downstream thereof.

The parameters detected by the sensors are stored in the control unit, which compares them with predefined data for control purposes.

Important parameters to be considered in the extraction process, in order to obtain a final product with satisfactory organoleptic and sensory properties, can typically be the pressure and temperature in the extraction chamber as well as the output flow or delivery rate.

These parameters can therefore also be subject to a sophisticated control by the control system of the coffee extraction machine, in order to provide a high quality product, satisfactory from an organoleptic and sensory point of view, even in the presence of variability of other factors, including, by way of example, the type or origin of the coffee, the degree of grinding, the type or temperature of the water, environmental conditions, such as humidity or temperature or other factors.

Then, there are coffee extraction machines that implement advanced control systems, which are typically based on signals deriving from sensors, for example temperature or pressure sensors, and which command devices, such as pumps or valves.

It is also known that the coffee beverage extracted as described above is a food liquid that dirties and that also tends to generate deposits along the circuits, the delivery valves or other devices present and through which the liquid coffee delivered passes.

The presence and accumulation of these deposits over time can cause a change in the hydraulic capacities of the circuit associated with the delivery assembly and, in particular, of the delivery valve which may be present downstream of the extraction chamber. The passage gap of the channels of the delivery valve, in this case, can gradually decrease, at least partly obstructing the passage of the liquid coffee, which can have an unpredictable impact on the control of the delivery, making the efforts put in place in order to provide the machine with a sophisticated control system as described above either vain or ineffective.

Consequently, there is the need to periodically check and clean the delivery assembly in order to verify that there is no dirt or obstructions inside the channels, in particular of the delivery valve.

Document EP-A-2.103.235 describes a machine for the preparation of espresso coffee, comprising an infusion chamber with a seating to contain coffee powder to be infused. The bottom of the seating comprises a perforated disc for the passage of the infused coffee into a collection chamber below, which comprises an outlet communicating with a mouth to deliver the beverage. Between the outlet and the delivery mouth there is an overpressure valve that opens when the pressure in the infusion chamber exceeds a preset value.

There is therefore a need to provide a delivery assembly for a coffee-based beverage that is easily cleaned and that allows easy and quick adjustment of the flow rate of the coffee-based beverage according to the specific personalized requirements of a user.

In particular, one purpose of the present invention is to provide a delivery assembly for coffee-based beverages that is easy and convenient to maintain.

Another purpose of the present invention is to provide a delivery assembly for coffee-based beverages that allows the desired type of coffee to be delivered quickly and with high precision in the specific characteristics desired.

Another purpose of the present invention is to provide a delivery machine for coffee-based beverages that is easily cleanable, manageable and controllable and that produces a quality coffee beverage according to the customer's requirements.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, a delivery assembly, in accordance with the present invention, for a coffee beverage extracted under pressure by means of water through a substrate of powdered coffee comprises an extractor body which has a passage circuit from an entry aperture for the water to a delivery aperture of the coffee beverage, there being present, along the passage circuit, a first seating in which a selectively removable filter is provided in which an extraction chamber is defined. The extraction chamber is provided to receive the substrate of powdered coffee and is made downstream of the entry aperture. A second seating is present downstream of the first seating, communicating with the delivery aperture.

According to the invention, the delivery assembly comprises a proportional membrane valve selectively adjustable to control the delivery flow of the coffee beverage at exit from the extraction chamber provided in the first seating and able to be housed in the second seating, the valve comprising:
- a valve body in which a segment of the passage circuit is present, in communication on one side with the extraction chamber and on the other side with the delivery aperture;
- a shutter assembly on which a mobile membrane is mounted and provided with an actuation element associated with the membrane.

According to the invention, the valve body is releasably coupled with the shutter assembly, so as to selectively present a first mounted condition, defining an interception chamber present between the valve body and the shutter assembly in which the membrane is mobile to selectively intercept the segment of passage circuit of the valve body, maintaining the segment separate from the actuation element of the shutter assembly, in the first mounted condition the valve being positioned in the second seating in order to control the flow of extracted coffee beverage delivered through the extraction chamber, and a second disassembled condition, in which the shutter assembly is disassembled from the valve body for the purposes of cleaning the valve.

Consequently, by releasing the coupling between the valve body and the membrane shutter assembly, the two elements can be separated and thoroughly cleaned to remove any residue of dirt or suchlike, which can deposit in particular on the coupling interface, which could otherwise hinder the passage of liquid, negatively impacting the speed of the flow of the liquid coffee-based beverage during the preparation, ensuring the overall maintenance of the delivery assembly is easy and quick. In this way, the delivery assembly is optimized by requiring less maintenance efforts and ensuring correct and precise delivery of the coffee beverage as specifically requested by the user.

Advantageously, this delivery assembly can be applied in a machine to produce coffee of the known type, obtaining a machine to deliver coffee liquid that is flexible and allows to obtain, with adequate repeatability, reliability and precision, an extensive range of types of coffee with the specific characteristics desired by the user in a precise and punctual manner.

The present invention also concerns a machine to deliver a coffee beverage comprising a delivery assembly as described here.

Another aspect described here, but not covered by the claims, concerns a proportional membrane valve selectively adjustable to control the flow of delivery of a coffee beverage at exit from an extraction chamber of a delivery assembly of a machine to deliver a coffee beverage. According to one embodiment, such valve comprises a valve body and a shutter assembly on which a mobile membrane is mounted and provided with an actuation element associated with the membrane. The valve body as above is releasably coupled with the shutter assembly, so as to selectively present a first mounted condition, defining an interception chamber present between the valve body and the shutter assembly in which the membrane is mobile, and a second disassembled condition, in which the shutter assembly is disassembled from the valve body for the purposes of cleaning the valve.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an exploded perspective view of a delivery assembly for a coffee beverage in accordance with the embodiments described here;
- fig. 2 is a front view of the delivery assembly of fig. 1;
- fig. 3 is a section view along the section line III-III of the delivery assembly of fig. 1;
- fig. 4 is a section view of a variant of the delivery assembly of fig. 3;
- figs. 5 - 6 are enlarged details of the delivery assembly in fig. 3 in two possible operating conditions.
- fig. 7 is a section view of a variant of the delivery assembly of fig. 4;
- fig. 8 is a top plan view of a valve in accordance with embodiments described here;
- fig. 9 is a section along the line IX - IX of fig. 8;
- fig. 10 is a view in separate parts of a valve in accordance with some embodiments described here;
- fig. 11 is a view in separate parts of a delivery assembly for a coffee beverage in accordance with some embodiments described here;
- fig. 12 is a top plan view of a valve in accordance with other embodiments described here;
- fig. 13 is a front view of a delivery assembly for a coffee beverage in accordance with some embodiments described here;
- fig. 14 is a section along the line XIV - XIV of fig. 13.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

We will now refer in detail to the various embodiments of the invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants, as long as they fall within the scope of protection defined by the claims.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

With reference to the attached drawings, these show a delivery assembly 10 for a coffee beverage extracted under pressure by means of water through a substrate of powdered coffee. For example, the delivery assembly 10 can be used to prepare espresso coffee, cappuccino or other types of coffee beverages.

According to embodiments in accordance with the present invention, the delivery assembly 10 comprises an extractor body 11, in the sector also known as a filter holder, which has a passage circuit 13 that extends from an entry aperture 24 for the water to a delivery aperture 25 of the coffee beverage.

Along the passage circuit 13 there is a first seating 16 configured to receive a filter 12 which defines an extraction chamber to receive the substrate of powdered coffee. Such first seating 16 is made downstream of the entry aperture 24. Downstream of the first seating 16 there is also present a second seating 17 communicating with the delivery aperture 25.

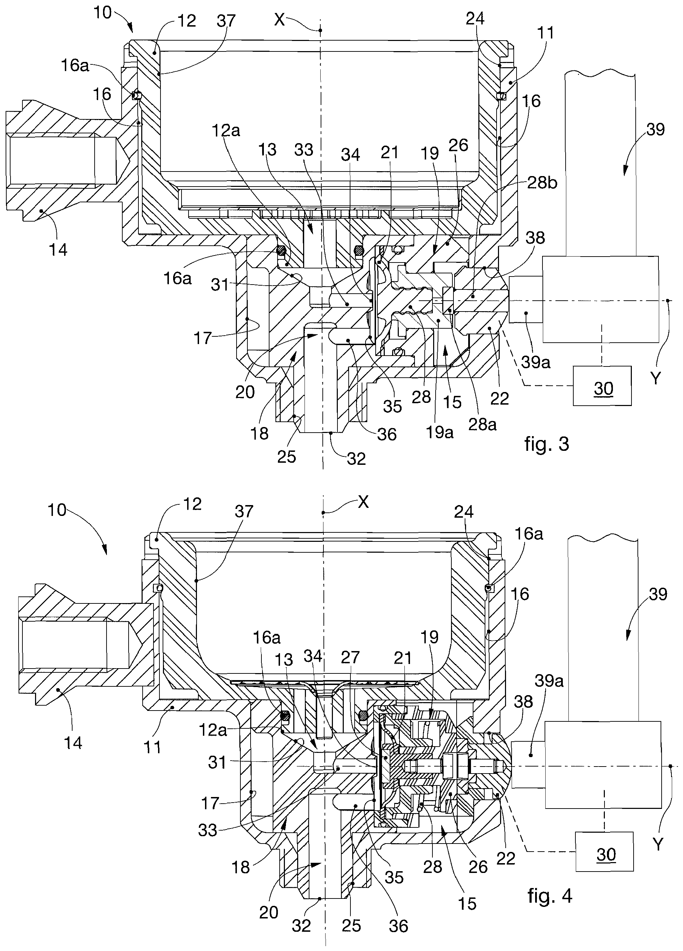

In particular, with reference to figs. 3-4, the delivery assembly 10 comprises at least one sealing ring 16a, for example an O-ring, interposed between the internal wall of the first seating 16 and the external wall of the filter 12 so that the liquid does not leak into the first seating 16 and is only channeled into the filter 12, into the extraction chamber and therefore toward the delivery aperture 25.

In accordance with embodiments described using the attached drawings, the delivery assembly 10 comprises a proportional membrane valve 15 selectively adjustable to control the delivery flow of the coffee beverage at exit from the extraction chamber defined in the filter 12 and able to be housed in the second seating 17.

The use of a membrane valve 15 is advantageous in terms of food safety because the presence of the membrane as a shutter element allows to separate the part of the valve 15 in which the coffee beverage passes from the actuation part of the membrane valve 15, giving the valve 15 the correct food safety, in particular preventing the beverage that will be consumed by the end user from coming into contact with mechanical and/or actuation parts. Furthermore, the presence of the membrane protects the actuation part from the coffee beverage which is known to be a food liquid that dirties and that tends to generate deposits. According to one aspect of the present invention, the valve 15 comprises:
- a valve body 18 in which a segment 20 of the passage circuit 13 is present, communicating on one side with the first seating 16 and on the other with the delivery aperture 25;
- a shutter assembly 19 on which a mobile membrane 21 is mounted, which acts as a shutter, and provided with an actuation element, or actuation cursor, 22 associated with the membrane 21.

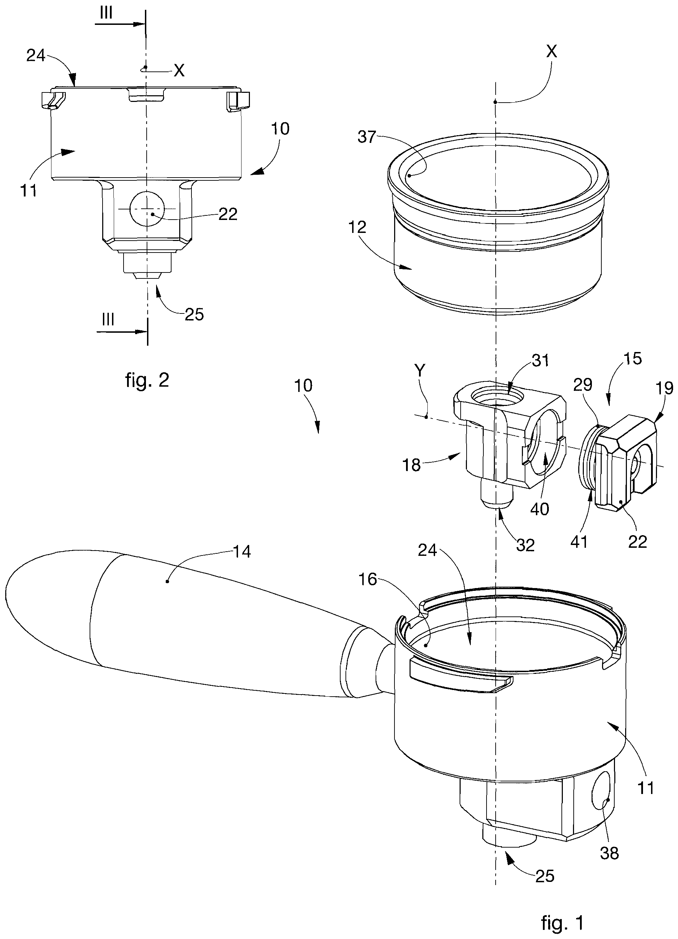

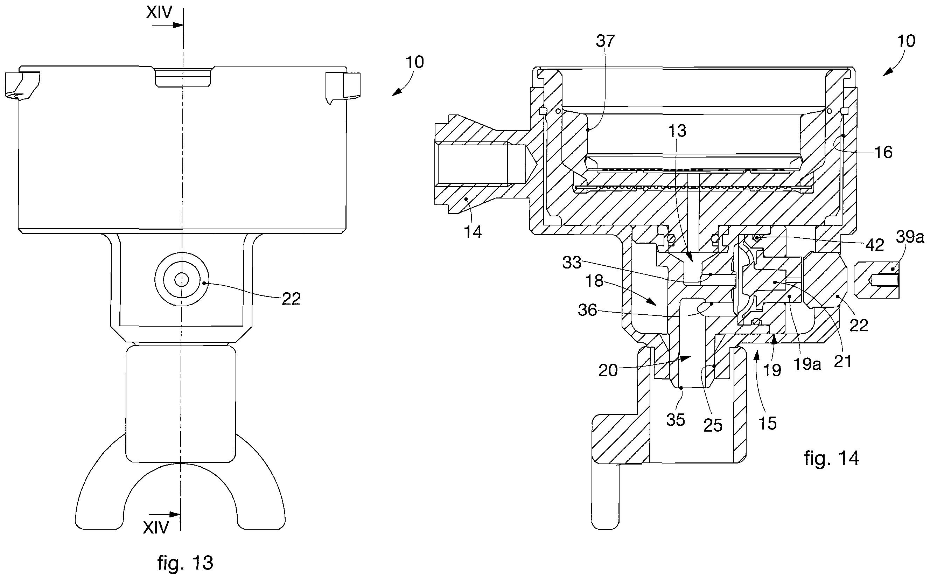

According to another aspect of the invention, the valve body 18 is releasably coupled with the shutter assembly 19, selectively presenting:
- a first mounted condition (for example figs. 3-6, 7, 8, 9, 12, 14), defining an interception chamber 23 present between the valve body 18 and the shutter assembly 19 in which the membrane 21 is mobile to selectively intercept the segment 20 of passage circuit 13 of the valve body 18, maintaining the segment 20 separate from the actuation element 22 of the shutter assembly 19, in said first mounted condition the valve 15 being positioned in the second seating 17 to control the flow of extracted coffee beverage delivered through the extraction chamber defined in the filter 12;
- a second disassembled condition (for example figs. 1, 10, 11), in which the shutter assembly 19 is disassembled from the valve body 18 for the purposes of cleaning the valve 15.

The valve 15 can therefore be easily removed from the delivery assembly 10 and disassembled, separating the valve body 18 from the shutter assembly 19, without needing to resort to a specialized operator and without using special tools for cleaning operations. Such cleaning operations are very important in order to allow an adequate control of the performance of the machine to prepare coffee in which the delivery assembly 10 is mounted, since the coffee beverage is known to be a food liquid that dirties, which tends to generate deposits which could adversely affect the performance of the valve 15. Such cleaning operations, using the present invention, are advantageously easy, quick and effective, thanks to the possibility of disassembling the valve body 18 separating it from the shutter assembly 19, and subsequently reassembling the valve 15 once cleaning is complete.

Advantageously, the presence of the valve 15 associated with the delivery aperture 25 allows to suitably control the conditions of the water, and in particular the pressure, inside the delivery assembly 10 and to adjust the flow rate of the coffee-based beverage at exit from the delivery aperture 25 as a function of the specifications requested by the user.

According to one embodiment, the delivery assembly 10 of the present invention is suitable to be inserted in a machine to make coffee of the known type. In particular, the delivery assembly 10 is suitable to be associated with a machine to make coffee which provides to heat water before making it percolate through a layer of coffee or panel provided in the filter 12 of the delivery assembly 10.

The extractor body 11 can have a grip 14 to facilitate the user while the extractor body 11 is being used, for example, in the machine to make coffee-based beverages of the known type. In fact, the extractor body 11 can be associated with the machine to make coffee in different ways, for example with a bayonet-type connection facilitated by the presence of the grip 14.

The filter 12, of a known type, can be substantially funnel-shaped and is configured to be housed inside the extractor body 11.

In particular, the filter 12 is provided with a containing compartment 37 in which coffee powder can be inserted in the selected granulometry. The containing compartment 37 is located in fluidic communication with the delivery aperture 25 and therefore the extraction chamber as above is defined therein.

According to one embodiment, the valve body 18 is provided with a first connection portion 40 configured to selectively couple, stably in a releasable manner, in the first mounted condition, with a second connection portion 41 provided in the shutter assembly 19.

According to one embodiment, the first connection portion 40 and the second connection portion 41 respectively of the valve body 18 and of the shutter assembly 19, in the first mounted condition, can be connected to each other by means of a geometric shape coupling guaranteeing the stability of the coupling itself.

Such connection portions 40, 41 can be, as a non-limiting example, circular with a mating and complementary shape.

In particular, the shutter assembly 19 can have the membrane 21 associated with the second coupling portion 41, the membrane 21 presenting a perimeter edge 29 configured to be firmly connected to the second coupling portion 41 in a hermetic manner so as to fluidically separate the actuation element 22 from the second coupling portion 41.

According to one embodiment, the first connection portion 40 and the second connection portion 41 respectively of the valve body 18 and of the shutter assembly 19 in the first mounted condition can be reciprocally connectable by means of a joint coupling.

According to one embodiment, the first connection portion 40 and the second connection portion 41 respectively of the valve body 18 and of the shutter assembly 19 can be reciprocally connectable by screwing.

According to one embodiment, the first connection portion 40 and the second connection portion 41 respectively of the valve body 18 and of the shutter assembly 19 can be reciprocally connectable by means of a bayonet-type coupling.

According to one embodiment, the first connection portion 40 and the second connection portion 41 respectively of the valve body 18 and of the shutter assembly 19 can be reciprocally connectable by means of a snap-in coupling.

The connection between the coupling of the first connection portion 40 and the second connection portion 41 respectively of the valve body 18 and of the shutter assembly 19 can be consolidated by an elastic sealing ring 42.

By way of example only, with reference to figs. 3-6, if the second connection portion 41 is configured to be inserted in the first connection portion 40, such elastic sealing ring 42 can be provided associated externally with the second connection portion 41 so as to make a seal on the first connection portion 40 in the first mounted condition.

With reference to figs. 3-4, the first seating 16 and the second seating 17 are consecutive and communicating with each other along an axis of delivery X which follows the outflow of the coffee-based beverage from percolation to the user.

According to one embodiment, the filter 12 can be selectively extracted or inserted in the first seating 16 along the axis of delivery X.

In particular, the filter 12 has a delivery end 12a which puts the extraction chamber in fluidic communication with the valve 15.

In particular, the filter 12 can provide one or more sealing rings 16a interposed between the first seating 16 and the filter 12, for example one close to the entry aperture 24 and one close to the delivery end 12a, so as to fluidically isolate the first seating 16 from the passage circuit 13.

In particular, the second seating 17 is of a smaller size than the first seating 16 and ends in the delivery aperture 25 from which the coffee-based beverage requested by the user exits.

The entry aperture 24, the extraction chamber defined in the filter 12, the valve 15 and the delivery aperture 25 are in selective fluidic communication with each other in sequence, in order to define the passage circuit 13.

According to one embodiment, with reference for example to fig. 1, the valve 15 can be selectively extracted or inserted in the second seating 17 along the axis of delivery X.

In particular, the valve body 18 has an oblong development along its longitudinal axis coinciding, in the first mounted condition, with the axis of delivery X joining the entry aperture 24 with the delivery aperture 25.

The shutter assembly 19 can have a development transverse to the valve body 18 and can be selectively disengaged in the second disassembled condition with respect to the valve body 18 along a coupling axis Y (fig. 1).

Such coupling axis Y can be transverse to the longitudinal axis of the valve body 18 as above.

The disengageable coupling between the valve body 18 and the shutter assembly 19 allows to better clean the valve 15, which is particularly relevant when using liquids that dirty, such as liquid food or beverages, in particular coffee.

According to one embodiment, with reference to figs. 3-4, the segment 20 of passage circuit 13 present in the valve body 18 is provided with an entry 31 in communication with the delivery end 12a of the filter 12, with an exit 32 in communication with the delivery aperture 25, with a first channel 33 from the entry 31 to a first intermediate exit 34 which opens into the interception chamber 23 and with a second channel 36 which develops from a second intermediate entry 35, present in the interception chamber 23, to the exit 32.

In particular, the exit 32 is the actual exit of the coffee beverage and it is coaxial inside the delivery aperture 25.

According to one embodiment, the first channel 33, the second channel 36 and the interception chamber 23 deviate, with respect to the axis of delivery X, the flow of the percolated coffee beverage along a U-shaped path substantially transverse to said axis of delivery X and ending in the delivery aperture 25.

Advantageously, the second channel 36 is located flush with the lower edge of the interception chamber 23, that is, facing the lower limit of the membrane 21, in order to prevent the creation of harmful and unwanted stagnations of coffee liquid; this measure improves the cleaning of the valve 15.

Furthermore, according to a first variant shown by way of example in figs. 3-6, the second channel 36 develops in a direction orthogonal to the axis of delivery X, that is, horizontal during use.

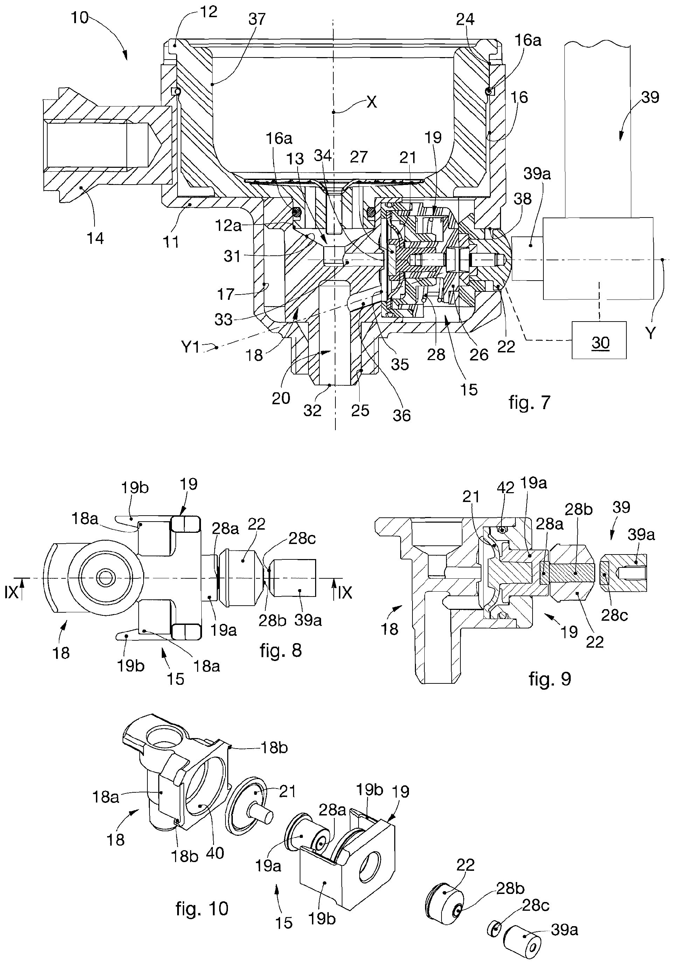

According to another variant, shown by way of example in fig. 7, the second channel 36 is inclined downward, facilitating the outflow of the coffee beverage. In particular, the second channel 36 develops in a direction Y1 inclined downward, in particular toward the delivery aperture 32, with respect to the axis of delivery X. This variant facilitates the outflow due to gravity of the coffee beverage toward the exit 32, preventing possible stagnations thereof and therefore guaranteeing a better cleaning of the valve body 18.

In particular, this inclination is emphasized in fig. 7 for the purposes of understanding the inclination of the direction Y1 with respect to the axis of delivery X. However, such inclination can also be less accentuated, for example an inclination of only a few degrees, so as to allow the correct outflow of the coffee beverage toward the exit 32, and therefore facilitate cleaning.

It should be noted here that, on the other hand, the first channel 33, even if made substantially horizontal, does not have any impediments to the outflow of the liquid since it is located directly downstream of the extraction chamber and, consequently, the outflow of the coffee beverage occurs due to the operating pressure present from the extraction chamber. In the second channel 36, this pressure is in fact no longer exerted and therefore it is advantageous to make the second channel 36 inclined or slightly inclined downward with respect to the axis of delivery X, in order to promote a correct and rapid outflow of the coffee beverage without undesired stagnations thereof. This measure increases the cleaning and safety performance of the valve 15.

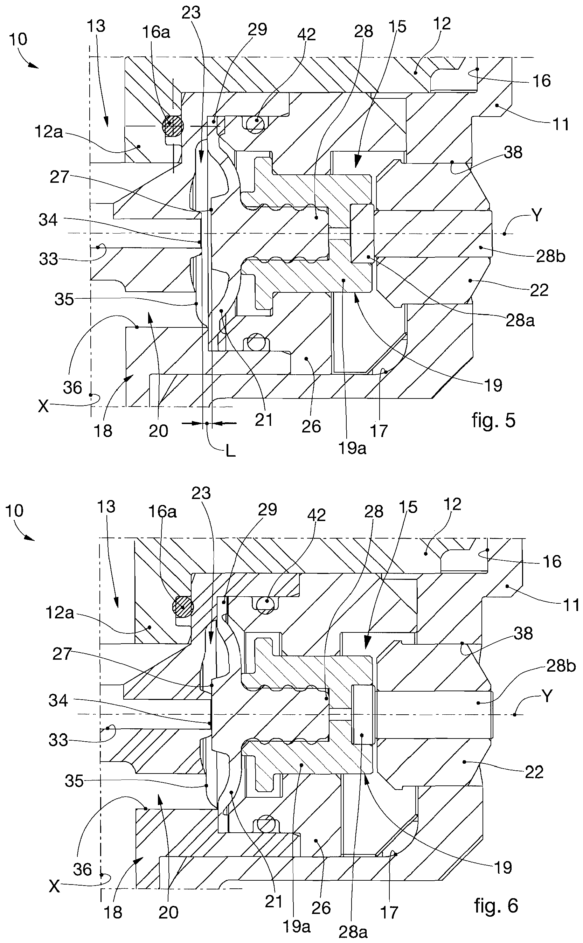

According to one embodiment, the membrane 21 has at least one non-operating position (fig. 5) in which it defines a passage gap L of the flow of the coffee beverage into the interception chamber 23, and at least one operating interception position (fig. 6) in which completely closes the passage gap L.

According to one embodiment, the membrane 21 is selectively moved from the non-operating position to the operating interception position by means of the actuation element 22. In particular, in the operating position the membrane 21 intercepts the first intermediate exit 34.

In particular, the membrane 21 in the non-operating position provides the maximum width of the passage gap L of the flow of the coffee beverage.

Advantageously, since the valve 15 is of a proportional type it allows to adjust the passage gap L, that is, the transit gap, of the coffee-based beverage toward the delivery aperture 25. In this way, the valve 15 also allows to adjust the volume of the interception chamber 23 by means of the movement of the membrane 21.

According to possible embodiments, the valve 15 can be a valve that functions with a pulse width modulation, or PWM, logic.

According to possible embodiments, the valve 15 is commanded to define the delivery time of the coffee beverage through the passage gap L. This solution can be commanded by means of a PWM logic.

According to a preferred embodiment, the membrane 21, in the operating interception position, intercepts the first intermediate exit 34 guaranteeing an optimal production of the flow of the coffee beverage.

In particular, the membrane 21 can have a series of intermediate working positions between the non-operating position and the operating position defining a passage gap L that varies according to the specifications requested by the user so as to divide the flow coming from the first intermediate exit 34.

Advantageously, making a valve 15 in two parts that can be disassembled, that is, valve body 18 and shutter assembly 19, allows to easily clean and sanitize, periodically and/or when necessary, the segment 20 of passage circuit 13, the membrane 21 and the interception chamber 23, always guaranteeing an optimum performance of the delivery assembly 10. In fact, if frequent maintenance is not carried out, the geometry of the passage gap L can be altered by the presence of coffee residues on the membrane 21 of the delivery unit 19 and/or on the walls of the segment 20 of passage circuit 13 of the valve body 18.

According to one embodiment, the movement of the membrane 21 occurs, in the first mounted condition, along an adjustment axis, coincident with the coupling axis Y of the second disassembled condition.

In particular, such passage gap L can selectively put the first channel 33 in communication with the second channel 36 of the segment 20 of passage circuit 13 defining the substantially U-shaped path of the coffee-based beverage transverse to the axis of delivery X.

According to one embodiment, the membrane 21, when it is in the operating interception position in which it totally obstructs the passage of the flow of the coffee-based beverage toward the delivery aperture 25, allows to condition the amount of time the water remains inside the delivery assembly 10 so as to perform a desired pre-infusion of the water in the powdered coffee before extracting the coffee beverage.

Advantageously the membrane 21 is in contact with the coffee beverage only on one side, allowing to separate the "dirtying" liquid, that is, the coffee beverage, from the actuation element 22 of the shutter assembly 19. In this way, the actuating part, that is, the part in contact with the actuation element 22 and possibly with electrical circuitry, is totally separated and kept "dry" and clean.

According to some embodiments, the shutter assembly 19 comprises at least one containing and support element 26 inside which the membrane 21 and the actuation element 22 are housed.

According to one embodiment, the membrane 21 can be integral with the actuation element 22.

In particular, such containing and support element 26 is configured to be stably housed in the second seating 17.

According to one embodiment, the delivery assembly 10 can comprise a drive device 39 configured to selectively activate the actuation element 22 to move the membrane 21 from the non-operating position to the operating interception position and vice versa.

The drive device 39 can be electric, mechanical or magnetic, or also a combination thereof.

The drive device 39 can for example include a feeler 39a able to cooperate with the actuation element 22.

According to one embodiment, the actuation element 22 can be configured to selectively protrude outside the extractor body 11 through a through hole 38 provided in a wall of the second seating 17. In this case, the drive device 39 can selectively drive the actuation element 22 outside the extractor body 11, for example pushing it through the through hole 38 toward the inside of the second seating 17.

According to one embodiment, the shutter assembly 19 comprises a shutter element 27 provided protruding with respect to the side of the membrane 21 that faces the coffee beverage and configured to obstruct the first intermediate exit 34 when the membrane 21 is in the operating interception position.

The shutter element 27 can have a surface, for example with a truncated-cone or spherical shape, suitable to intercept and obstruct the first intermediate exit 34 in a controlled manner.

Consequently, when the membrane 21 passes from the non-operating position to the operating interception position, the shutter element 27 is taken increasingly closer to the first intermediate exit 34 and/or to the second intermediate entry 35 until it is obstructed.

According to one embodiment, the membrane 21 and the shutter element 27 are made in a single body. In this way, an easier and faster cleaning of the membrane 21 is guaranteed and a complete separation between environments that provide the presence of so-called "dirty" liquids and environments that have to necessarily remain dry.

According to one embodiment, the membrane 21 can be made of yielding material, for example rubber, silicone or suchlike. In this way, the membrane 21 easily deforms under the thrust of the actuation element 22, reducing the passage gap L.

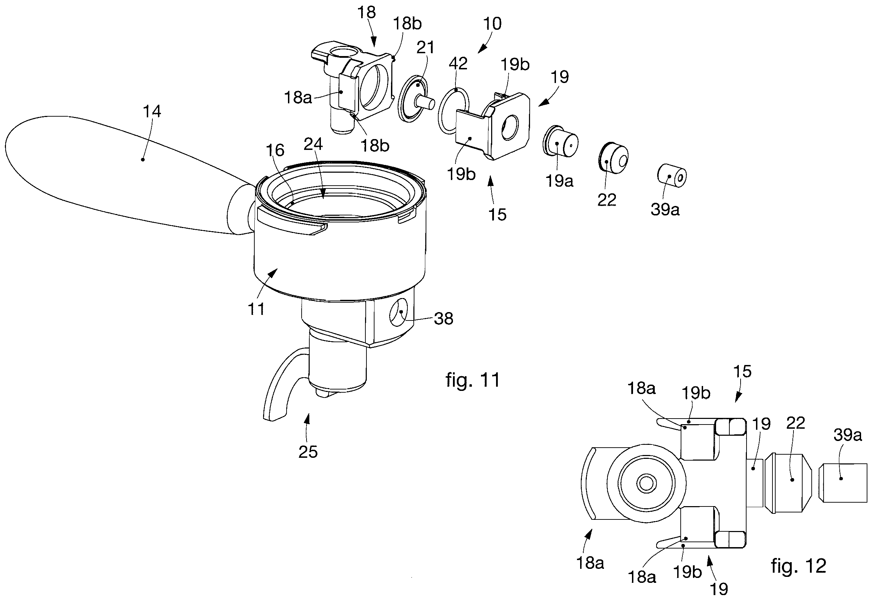

According to one embodiment, described using figs. 11-14, the membrane 21 can itself be made of elastic return material, for example a polymer with suitable elastic and mechanical properties. In this way, the membrane returns to its original position when the thrust of the actuation element 22 ceases. In this embodiment, therefore, by virtue of the intrinsic properties of the material of the membrane 21, specific return means are not provided.

According to other embodiments, the membrane 21 can be associated with specific return means 28 configured to maintain the membrane 21 in a non-operating position (figs. 3-10).

In particular, once the actuation thrust has ceased, the return means 28 automatically return the membrane 21 to the original condition, that is, in the non-operating position.

The return means 28 can be, for example, of the elastic return (figs. 4, 7) or magnetic return (figs. 3, 5, 6, 8-10) type.

In particular, the return means 28 of the elastic type can comprise a spring, as shown in figs. 4, 7.

According to one possible embodiment, the return means 28 can be provided integral with the membrane 21, protruding from the latter from the side not in contact with the coffee-based beverage and associated with the actuation element 22.

The return means 28 can be provided aligned with the shutter element 27 in order to maximize the actuation thrust toward the operating interception position and the return thrust toward the non-operating position.

According to one embodiment shown by way of example in figs. 3, 8-10, the magnetic return means 28 can provide a first magnet 28a integral with the shutter assembly 19 and a second magnet 28b integral with the actuation element 22 cooperating with each other. In this case, the first magnet 28a and the second magnet 28b can be configured to create a firm magnetic connection, creating a single body between the shutter assembly 19 and the actuation element 22 so as to be moved integrally through the through hole 38 in order to move the membrane 21 from the operating interception position to the non-operating position and vice versa.

For example, the first and second magnets 28a, 28b, once coupled, can be moved by means of the drive device 39 of the magnetic type.

Advantageously, the magnetic actuation allows to obtain extremely reduced response times and an extremely high adjustment precision. In fact, the shutter assembly 19 and the actuation element 22 move in unison once in magnetic connection, guaranteeing a more accurate control of the movement of the membrane 21.

According to embodiments described using figs. 3, 5, 6, 8-14, the shutter assembly 19 can be provided with a transmission slider 19a coupled to the membrane 21. The actuation element 22 is able to act on such transmission slider 19a.

In embodiments described using figs. 3, 5, 6, 8-10, the first magnet 28a can be present on such transmission slider 19a, while as stated the second magnet 28b is associated with the actuation element 22. In some embodiments, a third magnet 28c can also be present, disposed on the feeler 39a of the drive device 39.

According to embodiments described using figs. 8-14, the shutter assembly 19 can be provided with snap-in attachment fins 19b able to cooperate with corresponding attachment portions 18a of the valve body 18, in order to selectively determine a releasable snap-in coupling between the shutter assembly 19 and valve body 18, in order to make it disassemblable, as described above. In particular, the shutter assembly 19 can therefore be conformed as a clip for the purposes of achieving the snap-in attachment with the valve body 18. The valve body 18 can have respective insertion recesses 18b able to receive and guide the snap-in attachment fins 19b of the shutter assembly 19.

According to the present invention, a machine (not shown) to deliver a coffee beverage comprises a delivery assembly 10 as described here.

According to one embodiment, such machine comprises a control and command unit 30 configured to selectively move the membrane 21 at least from the non-operating position to the operating interception position, adjusting the passage gap L proportionally, on each occasion, as a function of the specifications requested by the customer.

According to one embodiment, the size of the passage gap L is adjusted, controlled and defined proportionally, on each occasion, by the control and command unit 30 as a function of the specifications requested by the customer. For example, the adjustment of the passage gap L allows to obtain a more or less creamy and/or more or less concentrated coffee-based beverage.

According to one embodiment, the actuation element 22 and/or the drive device 39 can be commanded and controlled by the command and control unit 30 as a function of the specific requests of the user.

It is clear that modifications and/or additions of parts may be made to the delivery assembly 10 for a coffee beverage as described heretofore, without departing from the field and scope of the present invention as defined by the appended claims.

It is also clear that, although the present invention has been described with reference to some specific examples, a person of skill in the art shall certainly be able to achieve many other equivalent forms of delivery assembly 10 for a coffee beverage, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Delivery assembly for a coffee beverage extracted under pressure by means of water through a substrate of powdered coffee, said assembly comprising:
- an extractor body (11) which has a passage circuit (13) from an entry aperture (24) for the water to a delivery aperture (25) of the coffee beverage, there being present, along said passage circuit (13), a first seating (16) in which a selectively removable filter (12) is provided which defines an extraction chamber to receive said substrate of powdered coffee made downstream of said entry aperture (24) and, downstream of said first seating (16), a second seating (17) communicating with said delivery aperture (25), the delivery assembly being **characterized by**
- a proportional membrane valve (15) selectively adjustable to control the delivery flow of said coffee beverage at exit from said extraction chamber and able to be housed in said second seating (17), said valve comprising:
- a valve body (18) in which a segment (20) of the passage circuit (13) is present, in communication on one side with said extraction chamber defined in said filter (12) and on the other side with said delivery aperture (25);
- a shutter assembly (19) on which a mobile membrane (21) is mounted and provided with an actuation element (22) associated with said membrane (21);
said valve body (18) being releasably coupled with said shutter assembly (19), so as to selectively present a first mounted condition, defining an interception chamber (23) present between said valve body (18) and said shutter assembly (19) in which said membrane (21) is mobile to selectively intercept said segment (20) of the passage circuit (13) of the valve body (18), maintaining said segment (20) separate from the actuation element (22) of the shutter assembly (19), in said first mounted condition said valve (15) being positioned in said second seating (17) in order to control the flow of extracted coffee beverage delivered through said extraction chamber and a second disassembled condition, in which said shutter assembly (19) is disassembled from said valve body (18) for the purposes of cleaning said valve (15).

2. Delivery assembly as in claim 1, **characterized in that** said valve body (18) is provided with a first connection portion (40) configured, in the first mounted condition, to selectively couple, stably in a releasable manner, with a second connection portion (41) provided in the shutter assembly (19).

3. Delivery assembly as in claim 2, **characterized in that** said first connection portion (40) and said second connection portion (41), in the first mounted condition, are connectable to each other by means of a geometric shape coupling.

4. Delivery assembly as in any claim hereinbefore, **characterized in that** said segment (20) of the passage circuit (13) present in said valve body (18) is provided with an entry (31) in communication with a delivery end (12a) of said filter (12), with an exit (32) in communication with said delivery aperture (25), with a first channel (33) from said entry (31) to a first intermediate exit (34) which opens into said interception chamber (23), and with a second channel (36) which develops from a second intermediate entry (35), present in said interception chamber (23), to said exit (32).

5. Delivery assembly as in claim 4, **characterized in that** said valve body (18) has an oblong development along a longitudinal axis of its own coinciding, in the first mounted condition, with an axis of delivery (X) joining said entry aperture (24) with said delivery aperture (25), in which said second channel (36) develops in a direction (Y1) inclined downward with respect to said axis of delivery (X).

6. Delivery assembly as in any claim hereinbefore, **characterized in that,** in said first mounted condition, said membrane (21) has at least one non-operating position in which it defines a passage gap (L) of the flow of coffee beverage into said interception chamber (23) and at least one operating interception position in which it completely closes said passage gap (L).

7. Delivery assembly as in claim 6, **characterized in that** said membrane (21) has a series of intermediate working positions between said non-operating position and said operating interception position defining a variable passage gap (L) dividing the flow of the coffee beverage.

8. Delivery assembly as in claims 4 or 5 and 6 or 7, **characterized in that** said shutter assembly (19) comprises a shutter element (27) provided protruding with respect to the side of the membrane (21) facing toward the coffee beverage and configured to selectively obstruct said first intermediate exit (34) when said membrane (21) is in the operating interception position.

9. Delivery assembly as in claim 8, **characterized in that** said membrane (21) and said shutter element (27) are made in a single body.

10. Delivery assembly as in any claim from 6 to 9, **characterized in that** said membrane (21) is associated with return means (28) configured to maintain the membrane (21) in the non-operating position, said actuation element (22) being configured to selectively move said membrane (21) at least from said non-operating position to said operating interception position.

11. Delivery assembly as in claim 10, **characterized in that** said return means (28) are of the elastic or magnetic type.

12. Delivery assembly as in any claim from 6 to 9, **characterized in that** said membrane (21) is made of elastic return material, so as to return into the non-operating position when the thrust of said actuation element (22) ends.

13. Delivery assembly as in any claim from 6 to 12, **characterized in that** it comprises a drive device (39) configured to selectively activate the actuation element (22) to move said membrane (21) from said non-operating position to said operating interception position, and vice versa.

14. Machine to deliver a coffee beverage comprising a delivery assembly as in any claim hereinbefore.

15. Machine as in claim 14, **characterized in that** it comprises a control and command unit (30) configured to selectively move said membrane (21) at least from one non-operating position to one operating interception position by adjusting in a proportional manner a passage gap (L) for the flow of coffee beverage.

## Patentansprüche

1. Ausgabevorrichtung für ein Kaffeegetränk, das mittels Wasser unter Druck durch ein Pulverkaffee-Substrat hindurch extrahiert wird, wobei die Vorrichtung aufweist:
- einen Extrahierkörper (11), der einen Durchgangskanal (13) von einer Eingangsöffnung (24) für das Wasser aus zu einer Ausgabeöffnung (25) für das Kaffeegetränk hat, wobei entlang des Durchgangskanals (13) vorliegen ein stromabwärts von der Eingangsöffnung (24) erstellter erster Sitz (16), in welchem ein selektiv entnehmbarer Filter (12) bereitgestellt ist, der eine Extrahierkammer definiert zum Aufnehmen des Pulverkaffee-Substrats, und, stromabwärts von dem ersten Sitz (16), ein zweiter Sitz (17), der mit der Ausgabeöffnung (25) kommuniziert, wobei die Ausgabevorrichtung **gekennzeichnet ist durch**
- ein Proportionalmembranventil (15), das selektiv einstellbar ist zum Steuern des Ausgabeflusses des Kaffeegetränks am Ausgang von der Extrahierkammer und das imstande ist, in dem zweiten Sitz (17) aufgenommen zu sein, wobei das Ventil aufweist:
- einen Ventilkörper (18), in welchem ein Abschnitt (20) des Durchgangskanals (13) vorliegt, in Kommunikation auf einer Seite mit der im Filter (12) definierten Extrahierkammer und auf der anderen Seite mit der Ausgabeöffnung (25),
- eine Verschlussvorrichtung (19), an welcher eine bewegbare Membran (21) angebracht ist und die mit einem Betätigungselement (22) bereitgestellt ist, das mit der Membran (21) verbunden ist,
wobei der Ventilkörper (18) mit der Verschlussvorrichtung (19) lösbar gekuppelt ist, um selektiv einen ersten montiert-Zustand, definierend eine Abschneidekammer (23), die zwischen dem Ventilkörper (18) und der Verschlussvorrichtung (19) vorliegt, in welcher die bewegbare Membran (21) bewegbar ist, um den Abschnitt (20) des Durchgangskanals (13) des Ventilkörpers (18) selektiv abzuschneiden, dadurch den Abschnitt (20) von dem Betätigungselement (22) der Verschlussvorrichtung (19) getrennt haltend, wobei in dem ersten montiert-Zustand das Ventil (15) in dem zweiten Sitz (17) positioniert ist, um den Fluss des extrahierten Kaffeegetränks, das durch die Extrahierkammer hindurch ausgegeben wird, zu steuern, und einen zweiten demontiert-Zustand zu haben, in welchem die Verschlussvorrichtung (19) von dem Ventilkörper (18) demontiert ist zu Zwecken des Reinigens des Ventils (15).

2. Ausgabevorrichtung gemäß Anspruch 1, **dadurch gekennzeichnet, dass** der Ventilkörper (18) mit einem ersten Verbindungsabschnitt (40) bereitgestellt ist, der konfiguriert ist, um in dem ersten montiert-Zustand mit einem zweiten Verbindungsabschnitt (41), der in der Verschlussvorrichtung (19) bereitgestellt ist, selektiv, stabil in einer lösbaren Weise, verbunden zu sein.

3. Ausgabevorrichtung gemäß Anspruch 2, **dadurch gekennzeichnet, dass** der erste Verbindungsabschnitt (40) und der zweite Verbindungsabschnitt (41) in dem ersten montiert-Zustand miteinander verbindbar sind mittels einer geometrische-Form-Verbindung.

4. Ausgabevorrichtung gemäß irgendeinem vorigen Anspruch, **dadurch gekennzeichnet, dass** der Abschnitt (20) des Durchgangskanals (13), der in dem Ventilkörper (18) vorliegt, bereitgestellt ist mit einem Eingang (31), der in Kommunikation mit einem Ausgabeende (12a) des Filters (12) ist, mit einem Ausgang (32), der in Kommunikation mit der Ausgabeöffnung (25) ist, mit einem ersten Kanal (33) von dem Eingang (31) aus zu einem ersten Zwischenausgang (34), der in die Abschneidekammer (23) mündet, und mit einem zweiten Kanal (36), der sich von einem zweiten Zwischeneingang (35) aus, der in der Abschneidekammer (23) vorliegt, zu dem Ausgang (32) erstreckt.

5. Ausgabevorrichtung gemäß Anspruch 4, **dadurch gekennzeichnet, dass** der Ventilkörper (18) eine langgestreckte Erstreckung hat entlang einer Längsachse von ihm, die in dem ersten montiert-Zustand mit einer Ausgabeachse (X) zusammenfällt, welche die Eingangsöffnung (24) mit der Ausgabeöffnung (25) verbindet, wobei sich der zweite Kanal (36) in einer Richtung (Y1) erstreckt, die bezüglich der Ausgabeachse (X) nach unten geneigt ist.

6. Ausgabevorrichtung gemäß irgendeinem vorigen Anspruch, **dadurch gekennzeichnet, dass** die Membran (21) im erstenmontiert-Zustand wenigstens eine nicht-Arbeits-Position, in welcher sie einen Durchgangsspalt (L) für den Kaffeegetränk-Fluss in die Abschneidekammer (23) definiert, und wenigstens eine Arbeits-Abschneideposition hat, in welcher sie den Durchgangsspalt (L) komplett schließt.

7. Ausgabevorrichtung gemäß Anspruch 6, **dadurch gekennzeichnet, dass** die Membran (21) eine Reihe von Zwischen-Arbeitspositionen zwischen der nicht-Arbeits-Position und der Arbeits-Abschneideposition hat, definierend einen variablen Durchgangsspalt (L), der den Fluss des Kaffeegetränks einteilt.

8. Ausgabevorrichtung gemäß Ansprüchen 4 oder 5 und 6 oder 7, **dadurch gekennzeichnet, dass** die Verschlussvorrichtung (19) ein Verschlusselement (27) aufweist, das bezüglich der Seite der Membran (21), die zu dem Kaffeegetränk hingewandt ist, vorstehend bereitgestellt ist und konfiguriert ist, um den ersten Zwischenausgang (34) selektiv zu versperren, wenn die Membran (21) in der Arbeits-Abschneideposition ist.

9. Ausgabevorrichtung gemäß Anspruch 8, **dadurch gekennzeichnet, dass** die Membran (21) und das Verschlusselement (27) als ein einziger Körper erstellt sind.

10. Ausgabevorrichtung gemäß irgendeinem Anspruch von 6 bis 9, **dadurch gekennzeichnet, dass** die Membran (21) mit Rückstellmitteln (28) verbunden ist, die konfiguriert sind, um die Membran (21) in der nicht-Arbeits-Position zu halten, wobei das Betätigungsmittel (22) konfiguriert ist, um die Membran (21) selektiv zu bewegen zumindest von der nicht-Arbeits-Position aus zu der Arbeits-Abschneideposition.

11. Ausgabevorrichtung gemäß Anspruch 10, **dadurch gekennzeichnet, dass** die Rückstellmittel (28) vom elastischen oder magnetischen Typ sind.

12. Ausgabevorrichtung gemäß irgendeinem Anspruch von 6 bis 9, **dadurch gekennzeichnet, dass** die Membran (21) aus einem elastischen Rückstellmaterial gemacht ist, um in die nicht-Arbeits-Position zurückzukehren, wenn die Kraft des Betätigungselements (22) endet.

13. Ausgabevorrichtung gemäß irgendeinem Anspruch von 6 bis 12, **dadurch gekennzeichnet, dass** es aufweist eine Antriebsvorrichtung (39), die konfiguriert ist, um das Betätigungselement (22) selektiv zu aktivieren, um die Membran (21) von der nicht-Arbeits-Position aus zu der Arbeits-Abschneideposition zu bewegen und vice versa.

14. Maschine zum Ausgeben eines Kaffeegetränks, aufweisend eine Ausgabevorrichtung gemäß irgendeinem vorigen Anspruch.

15. Maschine gemäß Anspruch 14, **dadurch gekennzeichnet, dass** sie eine Steuer- und Befehlseinheit (30) aufweist, die konfiguriert ist, um die Membran (21) selektiv zu bewegen zumindest von einer nicht-Arbeits-Position aus zu einer Arbeits-Abschneideposition durch Einstellen, in einer proportionalen Weise, eines Durchgangsspalts (L) für den Kaffeegetränk-Fluss.

## Revendications

1. Ensemble de distribution pour une boisson au café extraite sous pression au moyen d'eau à travers un substrat de café en poudre, ledit ensemble comprenant :
- un corps d'extracteur (11) qui présente un circuit de passage (13) depuis une ouverture d'entrée (24) pour l'eau vers une ouverture de distribution (25) de la boisson au café, en présence, le long dudit circuit de passage (13), d'un premier siège (16), dans lequel un filtre sélectivement amovible (12) est prévu, qui définit une chambre d'extraction pour recevoir ledit substrat de café en poudre fabriqué en aval de ladite ouverture d'entrée (24) et, en aval dudit premier siège (16), un second siège (17) communiquant avec ladite ouverture de distribution (25), l'ensemble de distribution étant **caractérisé par**
- une vanne à membrane proportionnelle (15) ajustable de manière sélective pour commander l'écoulement de distribution de ladite boisson au café à la sortie de ladite chambre d'extraction et pouvant être logée dans ledit second siège (17), ladite vanne comprenant :
- un corps de vanne (18) dans lequel un segment (20) du circuit de passage (13) est présent, en communication d'un côté avec ladite chambre d'extraction définie dans ledit filtre (12) et de l'autre côté avec ladite ouverture de distribution (25) ;
- un ensemble d'obturateur (19) sur lequel une membrane mobile (21) est montée, et pourvu d'un élément d'actionnement (22) associé à ladite membrane (21) ;
ledit corps de vanne (18) étant couplé de manière libérable audit ensemble d'obturateur (19), de manière à présenter sélectivement un premier état monté, définissant une chambre d'interception (23) présente entre ledit corps de vanne (18) et ledit ensemble d'obturateur (19) dans laquelle ladite membrane (21) est mobile pour intercepter sélectivement ledit segment (20) du circuit de passage (13) du corps de vanne (18), en maintenant ledit segment (20) séparé de l'élément d'actionnement (22) de l'ensemble d'obturateur (19), dans ledit premier état monté, ladite vanne (15) étant positionnée dans ledit second siège (17) afin de commander l'écoulement de boisson au café extraite délivrée à travers ladite chambre d'extraction, et un second état démonté, dans lequel ledit ensemble d'obturateur (19) est démonté dudit corps de vanne (18) à des fins de nettoyage de ladite vanne (15).

2. Ensemble de distribution selon la revendication 1, **caractérisé en ce que** ledit corps de vanne (18) est pourvu d'une première partie de connexion (40) configurée, dans le premier état monté, pour se coupler de manière sélective, de manière stable d'une manière libérable, avec une seconde partie de connexion (41) prévue dans l'ensemble d'obturateur (19).

3. Ensemble de distribution selon la revendication 2, **caractérisé en ce que** ladite première partie de connexion (40) et ladite seconde partie de connexion (41), dans le premier état monté, peuvent être connectées l'une à l'autre au moyen d'un couplage de forme géométrique.

4. Ensemble de distribution selon l'une quelconque des revendications précédentes, **caractérisé en ce que** ledit segment (20) du circuit de passage (13) présent dans ledit corps de vanne (18) est pourvu d'une entrée (31) en communication avec une extrémité de distribution (12a) dudit filtre (12), d'une sortie (32) en communication avec ladite ouverture de distribution (25), d'un premier canal (33) depuis ladite entrée (31) vers une première sortie intermédiaire (34) qui s'ouvre dans ladite chambre d'interception (23), et d'un second canal (36) qui se développe depuis une seconde entrée intermédiaire (35), présente dans ladite chambre d'interception (23), vers ladite sortie (32).

5. Ensemble de distribution selon la revendication 4, **caractérisé en ce que** ledit corps de vanne (18) présente un développement oblong le long d'un axe longitudinal qui lui est propre et qui coïncide, dans le premier état monté, avec un axe de distribution (X) reliant ladite ouverture d'entrée (24) à ladite ouverture de distribution (25), dans lequel ledit second canal (36) se développe dans une direction (Y1) inclinée vers le bas par rapport audit axe de distribution (X).

6. Ensemble de distribution selon l'une quelconque des revendications précédentes, **caractérisé en ce que**, dans ledit premier état monté, ladite membrane (21) présente au moins une position de non-fonctionnement dans laquelle elle définit un espace de passage (L) de l'écoulement de boisson au café dans ladite chambre d'interception (23) et au moins une position d'interception de fonctionnement dans laquelle elle ferme complètement ledit espace de passage (L).

7. Ensemble de distribution selon la revendication 6, **caractérisé en ce que** ladite membrane (21) présente une série de positions de travail intermédiaires entre ladite position de non-fonctionnement et ladite position d'interception de fonctionnement définissant un espace de passage variable (L) divisant l'écoulement de la boisson au café.

8. Ensemble de distribution selon les revendications 4 ou 5 et 6 ou 7, **caractérisé en ce que** ledit ensemble d'obturateur (19) comprend un élément obturateur (27) prévu en saillie par rapport au côté de la membrane (21) faisant face à la boisson au café et configuré pour obstruer de manière sélective ladite première sortie intermédiaire (34) lorsque ladite membrane (21) est dans la position d'interception de fonctionnement.

9. Ensemble de distribution selon la revendication 8, **caractérisé en ce que** ladite membrane (21) et ledit élément obturateur (27) sont réalisés en un seul corps.

10. Ensemble de distribution selon l'une quelconque des revendications 6 à 9, **caractérisé en ce que** ladite membrane (21) est associée à des moyens de retour (28) configurés pour maintenir la membrane (21) dans la position de non-fonctionnement, ledit élément d'actionnement (22) étant configuré pour déplacer de manière sélective ladite membrane (21) au moins de ladite position de non-fonctionnement à ladite position d'interception de fonctionnement.

11. Ensemble de distribution selon la revendication 10, **caractérisé en ce que** lesdits moyens de retour (28) sont du type élastique ou magnétique.

12. Ensemble de distribution selon l'une quelconque des revendications 6 à 9, **caractérisé en ce que** ladite membrane (21) est réalisée en un matériau de retour élastique, de manière à retourner dans la position de non-fonctionnement lorsque la poussée dudit élément d'actionnement (22) se termine.

13. Ensemble de distribution selon l'une quelconque des revendications 6 à 12, **caractérisé en ce qu'**il comprend un dispositif d'entraînement (39) configuré pour activer de manière sélective l'élément d'actionnement (22) afin de déplacer ladite membrane (21) de ladite position de non-fonctionnement à ladite position d'interception de fonctionnement, et vice versa.

14. Machine pour distribuer une boisson au café comprenant un ensemble de distribution selon l'une quelconque des revendications précédentes.

15. Machine selon la revendication 14, **caractérisée en ce qu'**elle comprend une unité de contrôle et de commande (30) configurée pour déplacer de manière sélective ladite membrane (21) d'au moins une position de non-fonctionnement à une position d'interception de fonctionnement en ajustant de manière proportionnelle un espace de passage (L) pour l'écoulement de boisson au café.
